# EUROPÄISCHE PATENTSCHRIFT

(11) **EP 0 973 601 B1**
(45) Veröffentlichungstag und Bekanntmachung des Hinweises auf die Patenterteilung: **05.12.2001**
(21) Anmeldenummer: 98914787.1
(22) Anmeldetag: 18.02.1998
(51) Int. Cl.: B01D 61/30, B01D 63/02, B01D 65/00

(54) **FILTER MIT EINEM IN DER VERSCHLUSSKAPPE BEFINDLICHEN STRÖMUNGSLEITKÖRPER**
FILTER DEVICE WITH A FLOW GUIDE IN THE CLOSING CAP
FILTRE COMPORTANT UN CORPS DE GUIDAGE D'ECOULEMENT SITUE DANS LE CAPUCHON DE FERMETURE

(30) Priorität: 08.04.1997 DE 19714373; 21.04.1997 DE 19716646
(43) Veröffentlichungstag der Anmeldung: 26.01.2000
(73) Patentinhaber: Bio-Lab Vertriebgesellschaft mbH, 24539 Neumunster (DE)
(72) Erfinder: ANTONI, Roland, D-48308 Senden (DE); KLOPPSTECH, Edwin, D-25596 Wacken (DE); ZEMKE, Lutz-Rüdiger, D-08297 Zwönitz (DE)
(74) Vertreter: Biehl, Christian, Dipl.-Phys.
(86) Internationale Anmeldenummer: DE9800495
(87) Internationale Veröffentlichungsnummer: WO9845028

(56) Entgegenhaltungen:
- EP-A- 0 477 966
- DE-A- 3 435 883
- DE-A- 3 711 695

## Beschreibung

Die Erfindung betrifft ein Filter mit den Merkmalen des Oberbegriffs des Anspruchs 1.

Derartige Filter, wie sie aus der DE 38 31 786 A1, der DE 33 33 461, der EP 477 966 A1 und dem JP-Abstract C-460, 1989, Vol. 13, No. 431 bekannt sind, finden in vielfältiger Weise, insbesondere auch im medizinischen Bereich, Verwendung.

Das zu reinigende Fluid tritt dabei über einen durch die Verschlußkappe gebildeten Raum in die offenen Stirnflächen der Kapillaren der Hohlfasern ein. Das ungeleitete Fluid bildet in diesem Bereich Verwirbelungen, die den von dem Filter dem zu reinigenden Fluid entgegengebrachten Strömungswiderstand erhöhen und Bestandteile des zu reinigenden Fluids schädigen können.

Der Erfindung liegt die Aufgabe zugrunde, das vorbekannte Filter dahingehend zu weiterzubilden, daß es resterislisierbar ist.

Erfindungsgemäß wird diese Aufgabe durch die Merkmale des einzigen Anspruchs gelöst.

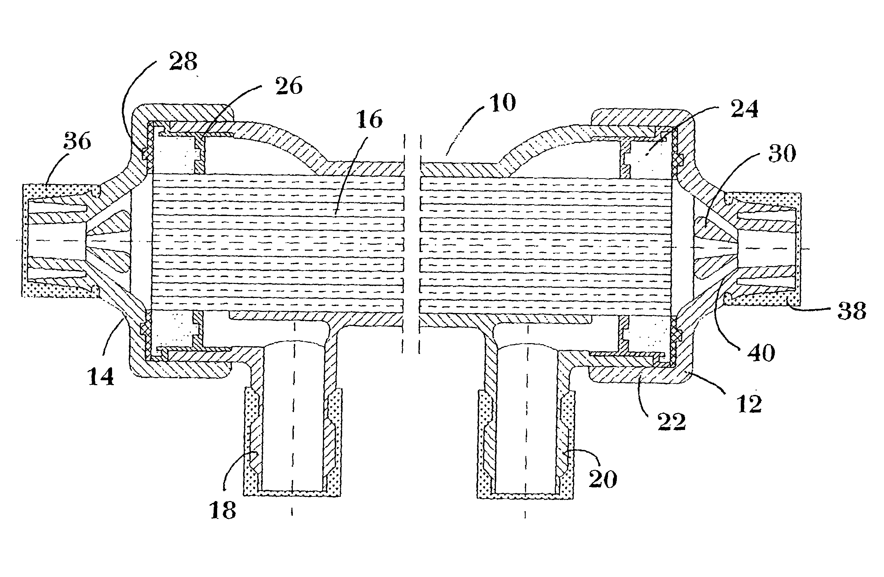

Die Erfindung wird im folgenden anhand einer Zeichnung erläutert. Dabei zeigt die einzige Figur eine Schnittansicht durch ein derartig ausgebildetes Filter.

Das Filter besteht aus einem im wesentlichen rohrförmigen Gehäuse 10, einer an der einen Stirnseite des Gehäuses angeordneten Einlass-Verschlußkappe 12 zum Einlassen des zu reinigenden Fluids, einer an der anderen Stirnseite des Gehäuses angeordneten Auslaß-Verschlußklappe 14, durch die das gereinigte Fluid wieder ausgelassen wird, einem von dem Gehäuse 10 aufgenommenen, von dem zu reinigenden Fluid durchströmten Hohlfasermembranbündel 16, einem seitlich an das Gehäuse angesetzten Einlaßstutzen 18 zum Zuführen eines die Fasern des Hohlfasermembranbündels 16 umströmenden Reinigungsfluids und einem seitlich an das Gehäuse angesetzten Auslaßstutzen 20 für das Reinigungsfluid.

Die Verschlußkappen 12, 14 sind mit einem Flanschabschnitt auf das Gehäuse 10 aufgesetzt.

Im Bereich der beiden äußeren Bereiche des Hohlfasermembranbündels sind diese umfassende Klebeblöcke 24 angeordnet, die den von dem Reinungsfluid umströmten Raum von dem Bereich der Verschlußkappen 12, 14 hermetisch abschließen.

Im Bereich der Veschlußklappen 12 und 14 sind jeweils in einem nach innen durch die Klebeblöcke 24 und nach außen einerseits durch die Flanschabschnitte 22 der Verschlußkappen 12, 14 und andererseits durch das Gehäuse 10 begrenzte Bereiche Kompensationsringe 26 angeordnet.

Zwischen den Klebeblöcken 24 und den Verschlußkappen 12, 14 ist jeweils ein Dichtungsscheibenring 28 vorgesehen.

Die Verschlußkappen 12, 14 sind sich von außen nach innen trompetenförmig erweiternd ausgebildet, in den Verschlußkappen 12, 14 ist jeweils ein Strömungsleitkörper 30 angeordnet, so daß in den Verschlußkappen 12, 14 jeweils ein trichterförmiger Ringraum gebildet ist, durch den das zu reinigende Fluid in den Filter eingeführt bzw. aus dem Filter ausgeführt wird. Die Strömungsleitkörper 30 wirken einer Bildung von Wirbeln in dem Raum, in dem das zu reinigende Fluid in die Hohlfasern eintritt, entgegen, wodurch zum einen der Strömungswiderstand des Filters reduziert und zum anderen die Bestandteile des zu reinigenden Fluids geschont werden, was insbesondere dann von Bedeutung ist, wenn es sich dabei um eine Körperflüssigkeit handelt.

Bei der Verwendung werden die Verschlußstopfen 36, 38 entfernt. Sodann wird ein geeignetes Schlauchsystem für das zu reinigende Fluid an die beiden Veschlußkappen 12, 14 angelegt. Das Fluid strömt sodann - von den Strömungsleitkörpern 30 geeignet verteilt - durch das eine Membran darstellende Hohlfasermembranbündel 16.

Ein Reinigungsfluid mit einer gegenüber dem zu reinigenden Fluid hohen Affinität wird über den Einlaßstutzen 18 in den Filter eingebracht und umströmt die als Membran wirkenden Fasern des Hohlfasermembranbündels 16 im Gegenstrom, um sodann durch den Auslaßstutzen 20 wieder abgeführt zu werden.

Die Verschlußkappen 12, 14 können auf das Gehäuse aufgeschraubt, aufgeschweißt, aufgeklebt, an diese angespritzt oder aber an diese angeklippst sein.

Zur haltbaren Ausführung der erfindungsgemäßen Filters wird vorgeschlagen, ein im wesentlichen rohrförmiges Gehäuse 10, mit einem an der einen Stirnseite des Gehäuses angeordneten, als mit einem Flanschabschnitt 22 auf das Gehäuse 10 aufgesetzte Verschlußkappen 12 ausbildenden Einlaß für das zu reinigende Fluid, einem an der anderen Stirnseite des Gehäuses 10 angeordneten, mit einem Flanschabschnitt 22 auf das Gehäuse 10 aufgesetzte Verschlußkappen 14 ausbildenden Auslaß, und weiter mit einem von dem Gehäuse 10 aufgenommenen, von dem zu reinigenden Fluid durchströmten Hohlfasermembranbündel 16, einem seitlich an das Gehäuse 10 angesetzten Einlaßstutzen 18 zum Zuführen eines die Fasern des Hohlfasermembranbündels 16 umströmenden Reinigungsfluids und einem seitlich an das Gehäuse 10 angesetzten Auslaßstutzen 20 für das Reinigungsfluid, wobei im Bereich der beiden äußeren Bereiche des Hohlfasermembranbündels 16 diese umfassend Klebeblöcke 24 angeordnet sind, und zwischen dem Hohlfasermembranbündel und dem Gehäuse 10 die Klebeblöcke 24 aufnehmende Kompensationsringe 26 angeordnet sind und zwischen den Klebeblöcken 24 und den Verschlußklappen 14 wiederum Dichtungsringe 28 angeordnet sind, wobei :
- das Gehäuse 10 und die Verschlußkappen 14 aus PEI, PES oder PPSU bestehen, die Kompensationsringe 26 aus PTFE bestehen,
- die Klebeblöcke 24 aus PUR oder SI bestehen,
- die Dichtungsringe 28 aus SI oder TPE bestehen, und
- das Hohlfasermembranbündel 16 aus modifizierter Cellulose, PEI, PES, PES/PA oder PTFE besteht,
   wobei
   PA für Polyamid,
   PEI für Polyetherimid,
   PES für Polyethersulfon,
   PPSU für Polyphenylsulfon,
   PTFE für Polytetrafluorethylen,
   PUR für Polyurethan,
   SI für Silikon und
   TPE für thermoplastische Elastomere.
steht.

Die Verschlußkappen 12, 14 sind sich von außen nach innen trompetenförmig erweiternd ausgebildet, in den Verschlußkappen 12, 14 ist jeweils ein Strömungsleitkörper 30 angeordnet, so daß in den Verschlußkappen 12, 14 jeweils ein trichterförmiger Ringraum gebildet ist, durch den das zu reinigende Fluid in den Filter eingeführt bzw. aus dem Filter ausgeführt wird. Die Strömungsleitkörper 30 wirken einer Bildung von Wirbeln in dem Raum, in dem das zu reinigende Fluid in die Hohlfasern eintritt, entgegen, wodurch zum einen der Strömungswiderstand des Filters reduziert und zum anderen die Bestandteile des zu reinigenden Fluids geschont werden, was insbesondere dann von Bedeutung ist, wenn es sich dabei um eine Körperflüssigkeit handelt.

Bei der Verwendung werden die Verschlußstopfen 36, 38 entfernt. Sodann wird ein geeignetes Schlauchsystem für das zu reinigende Fluid an die beiden Verschlußkappen 12, 14 angelegt. Das Fluid strömt sodann - von den Strömungsleitkörpern 30 geeignet verteilt - durch das eine Membran darstellende Hohlfasermembranbündel 16.

Ein Reinigungsfluid mit einer gegenüber dem zu reinigenden Fluid hohen Affinität wird über den Einlaßstutzen 18 in den Filter eingebracht und umströmt die als Membran wirkenden Fasern des Hohlfasermembranbündels 16 im Gegenstrom, um sodann durch den Auslaßstutzen 20 wieder abgeführt zu werden.

Die Verschlußkappen 12, 14 können auf das Gehäuse aufgeschraubt, aufgeschweißt, aufgeklebt, an diese angespritzt oder aber an diese angeklippst sein.

Die Ausbildung des Gehäuses 10 und der Verschlußkappen 14 aus PEI, PES, oder PPSU, der Kompensationsringe 26 aus PTFE, der Klebeblöcke 24 aus PUR oder SI, der Dichtungsringe 28 aus SI oder TPE und des Hohlfasermembranbündels aus modifizierter Cellulose, PEI, PES, PES/PA, oder PTFE erlaubt es, das Filter nach einer Verwendung zu durch chemische und/oder thermische Behandlung zu resterilisieren, da diese Materialien bei guten bakteriologischen Eigenschaften die erforderliche thermische Belastbarkeit zeigen.

## Patentansprüche

1. Filter mit einem im wesentlichen rohrförmigen Gehäuse (10),
einem an der einen Stirnseite des Gehäuses angeordneten Einlaß für das zu reinigende Fluid,
einem an der anderen Stirnseite des Gehäuses (10) angeordneten Auslaß, wobei die Halsabschnitte (40) des Ein- bzw. Auslasses sich zu dem Gehäuse (10) hin trompetenförmig erweiternd ausgebildet sind,
einem von dem Gehäuse (10) aufgenommenen, von dem zu reinigenden Fluid durchströmten Hohlfaserbündel (16),
einem seitlich an das Gehäuse (10) angesetzten Einlaßstutzen (18) zum Zuführen eines die Fasern des Hohlfaserbündels (16) umströmenden Reinigungsfluids und einem seitlich an das Gehäuse (10) angesetzten Auslaßstutzen (20) für das Reinigungsfluid,
im Bereich der beiden äußeren Bereiche des Hohlfaserbündels (16) diese umfassend angeordneten Klebeblöcke (24) aus PUR oder SI, und
zwischen dem Hohlfasermembranbündel und dem Gehäuse (10) die Klebeblöcke (24) aufnehmend angeordneten Kompensationsringen (26) und zwischen den Klebeblöcken (24) und den Verschlußklappen (14) angeordneten Dichtungsringe (28),
**dadurch gekennzeichnet, daß**
- der Einlaß als mit einem Flanschabschnitt (22) auf das Gehäuse (10) aufgesetzte Verschlußkappen (12) ausgebildet ist,
- der Auslaß als mit einem Flanschabschnitt (22) auf das Gehäuse (10) aufgesetzte Verschlußkappen (14) ausgebildeten Auslaß,
- das Gehäuse (10) und die Verschlußkappen (14) aus PEI, PES oder PPSU bestehen,
- die Kompensationsringe (26) aus PTFE bestehen,
- die Klebeblöcke (24) aus PUR oder SI bestehen,
- die Dichtungsringe (28) aus SI oder TPE bestehen, und
- das Hohlfasermembranbündel (16) aus modifizierter Cellulose, PEI, PES, PES/PA oder PTFE besteht,
wobei
PA für Polyamid,
PEI für Polyetherimid,
PES für Polyethersulfon,
PPSU für Polyphenylsulfon,
PTFE für Polytetrafluorethylen,
PUR für Polyurethan,
SI für Silikon und
TPE für thermoplastische Elastomere.
steht.

## Claims

1. Filter with a substantially tubular housing (10),
an inlet for the fluid to be cleaned located on one face of the housing,
an outlet located on the other face of the housing (10), the neck sections (40) of the inlet and/or outlet widening in trumpet-shaped manner to the housing (10),
a hollow fibre bundle (16) received by the housing (10) and through which flows the fluid to be cleaned,
an intake connecting piece (18), attached laterally to the housing (10), for the supply of a cleaning fluid flowing round the fibres of the hollow fibre bundle (16) and a discharge connecting piece (20) for the cleaning fluid attached laterally to the housing (10),
in the vicinity of the two outer areas of the hollow fibre bundle (16) are provided adhesive blocks (24) of PUR or SI embracing the same, and
between the hollow fibre membrane bundle and the housing (10), compensating rings (26) arranged so as to receive the adhesive blocks (24) and sealing rings (28) are located between the adhesive blocks (24) and the closing caps (14),
**characterized in that**
- the inlet is constructed as closing caps (24) mounted with a flange section (22) on the housing (10),
- the outlet is constructed as closing caps (14) mounted with a flange section (22) on the housing (10),
- the housing (10) and the closing caps (14) are made from PEI, PES or PPSU,
- the compensating rings (26) are made from PTFE,
- the adhesive blocks (24) are made from PUR or SI,
- the sealing rings (28) are made from SI or TPE and
- the hollow fibre membrane bundle (16) is made from modified cellulose, PEI, PES, PES/PA or PTFE, in which
PA = polyamide,
PEI = polyether imide,
PES = polyether sulphone,
PPSU = polyphenyl sulphone,
PTFE = polytetrafluoroethylene,
PUR = polyurethane,
SI = silicone and
TPE = thermoplastic elastomers.

## Revendications

1. Filtre pourvu
d'une enveloppe essentiellement en forme de tube (10),
d'une admission prévue sur une partie frontale de l'enveloppe pour l'admission du fluide à purifier,
d'une évacuation prévue sur l'autre partie frontale de l'enveloppe (10), alors que les sections de col (40) de l'admission, respectivement l'évacuation sont façonnées en s'élargissant en forme de trompette en direction de l'enveloppe (10),
d'un faisceau de fibres creuses (16) reçu à l'intérieur de l'enveloppe (10) et traversé par le fluide à purifier,
d'une tubulure d'admission (18), montée sur le côté latéral de l'enveloppe (10), pour l'admission d'un fluide de nettoyage circulant autour des fibres du faisceau de fibres creuses (16), et d'une tubulure d'évacuation (20), montée sur le côté latéral de l'enveloppe (10), pour le fluide de nettoyage,
dans la région des deux parties externes du faisceau de fibres creuses (16), des blocs collés (24) en PUR ou SI, qui entourent celles-ci, et
entre le faisceau à membrane de fibres creuses et l'enveloppe (10), des anneaux de compensation (26) recevant les blocs collés (24) et, entre les blocs collés (24) et les capuchons (14), des anneaux d'étanchéité (28),
**caractérisé en ce que**
- l'admission est façonnée comme un capuchon (12) monté sur l'enveloppe (10) au moyen d'une section à bride (22),
- l'évacuation est façonnée comme un capuchon (14) monté sur l'enveloppe (10) au moyen d'une section à bride (22),
- l'enveloppe (10) et les capuchons (14) sont en PEI, PES ou PPSU,
- les anneaux de compensation (16) sont en PTFE,
- les blocs collés (24) sont en PUR ou SI,
- les anneaux d'étanchéité (28) sont en SI ou TPE, et
- le faisceau à membrane de fibres creuses (16) est en cellulose modifiée, PEI, PES, PES/PA ou PTFE
les abréviations ayant les significations suivantes:
PA signifie polyamide
PEI signifie polyétherimide
PES signifie polyéthersulfone
PTFE signifie polytétrafluoréthylène
PUR signifie polyuréthane
SI signifie silicone et
TPW signifie élastomère thermoplastique
